# EUROPEAN PATENT APPLICATION

(11) **EP 4 398 385 A1**
(43) Date of publication of application: **10.07.2024**
(21) Application number: 22863373.1
(22) Date of filing: 29.08.2022
(51) Int. Cl.: H01M 50/147, H01M 50/10

(54) **ENERGY STORAGE APPARATUS AND ELECTRONIC DEVICE**

(30) Priority: 31.08.2021 CN 202122086907 U
(71) Applicant: Guangdong Mic-power New Energy Co., Ltd., Guangdong 516055 (CN)
(72) Inventor: CHEN, Zhiyong, Huizhou Guangdong 516055 (CN)
(74) Representative: Bittner, Bernhard
(86) International application number: PCT/CN2022/115457
(87) International publication number: WO 2023/030237

(57) **Abstract**

Disclosed are an energy storing apparatus and an electronic device. The energy storing apparatus comprises: a housing having a first opening through which a cavity of the housing communicates with the outside; an end cover connected to the housing, covering the first opening, and provided with a second opening; a metal part provided on an inner side of the end cover and having a first boss which protrudes via the second opening to an outer side of the end cover; and an insulating seal provided between the metal part and the end cover.

## Description

### CROSS-REFERENCE TO RELATED APPLICATIONS

The present disclosure claims priority to a Chinese patent application No. 202122086907.2 filed with the CNIPA on August 31, 2021 and entitled "ENERGY STORING APPARATUS AND ELECTRONIC DEVICE", which is hereby incorporated by reference in its entirety.

### TECHNICAL FIELD

The present disclosure relates to the field of storing energy, and particularly to an energy storing apparatus and an electronic device.

### BACKGROUND

At present, in a structure of an energy storing apparatus, a housing thereof is typically formed by assembling an upper half shell and a lower half shell. An electrode of the energy storing apparatus is welded to the housing to form an electrode on the housing, and forms electrical connection positions which are in electrical conduction with the outside at different positions of the housing. The electrical connection between the external circuit and the energy storing apparatus needs to form an electrical connection with the surface of the housing, however, the electrode in the housing cannot be directly led out, making it difficult to form a connection between the external circuit and the surface of the housing.

### SUMMARY

An objective of the present disclosure is to provide a new technical solution for an energy storing apparatus and an electronic device.

According to an aspect of the present disclosure, an energy storing apparatus is provided, comprising:
a housing having a first opening through which a cavity of the housing communicates with the outside;
an end cover connected to the housing, covering the first opening, and provided with a second opening;
a metal part provided on an inner side of the end cover and having a first boss which protrudes via the second opening to an outer side of the end cover; and
an insulating seal provided between the metal part and the end cover.

Optionally, the energy storing apparatus further comprises a cell which is provided in the cavity, one electrode of the cell is electrically connected to the metal part, and another electrode of the cell is electrically connected to the end cover or the housing.

Optionally, the cell is provided with a first electric connector;
the first electric connector comprises a first bending section, a second bending section and a third bending section, the second bending section is connected to the first bending section and the third bending section respectively, the third bending section is electrically connected to the cell, the second bending section is bent to an end face of the cell relative to the third bending section, the first bending section is bent relative to the second bending section, the first bending section is located between the second bending section and the metal part, and the first bending section is connected to the metal part.

Optionally, the metal part is provided with a first insulator which is provided with a third opening, and the first bending section is exposed via the third opening to connect with the metal part.

Optionally, the first bending section has a second boss which is exposed via the third opening to connect with the metal part.

Optionally, the cell comprises a positive electrode piece, a negative electrode piece, and a diaphragm located between the positive electrode piece and the negative electrode piece, and the positive electrode piece, the negative electrode piece and the diaphragm are laminated to form a winding structure;
one of the positive electrode piece and the negative electrode piece serves as one electrode of the cell to electrically connect to the metal part, and the other serves as another electrode of the cell to electrically connect to the end cover or the housing;
a portion of the diaphragm protruding from an end of the winding structure is an edge-ironed structure.

Optionally, the metal part is provided with an explosion-proof marking.

Optionally, the explosion-proof marking is arranged surrounding the first boss.

Optionally, the insulating seal comprises an annular floor and an annular sidewall provided on the annular floor, the annular floor is located between the end cover and the metal part, and the annular sidewall extends into the second opening and is located between the inner wall of the second opening and the first boss.

According to another aspect of the present disclosure, an electronic device is provided, comprising the energy storing apparatus as described in any one of above.

One technical effect of the present disclosure is that by providing the metal part inside the end cover, the electrode of the energy storing apparatus can be electrically connected to the metal part, and by making that the first boss on the metal part protrudes via the second opening to an outer side of the end cover, the electrode of the energy storing apparatus can be led out to the outside of the energy storing apparatus, and thus facilitates electrical connection to an external circuit.

Other features and advantages of the present disclosure will become apparent from the following detailed description of exemplary embodiments of the present disclosure with reference to the accompanying drawings.

### BRIEF DESCRIPTION OF THE DRAWINGS

The accompanying drawings, which constitute a part of the description, illustrate embodiments of the present disclosure and, together with the description thereof, serve to explain the principles of the present disclosure.
FIG. 1 is a schematic illustration of the external structure of an energy storing apparatus in one embodiment of the present disclosure.
FIG. 2 is a cross-sectional view of the energy storing apparatus of one embodiment of the present disclosure.
FIG. 3 is an exploded view of the energy storing apparatus of one embodiment of the present disclosure.

### Description of reference signs:

11-housing, 12-end cover, 120-second opening, 2-metal part, 21-first boss, 22-explosion-proof marking, 3-insulating seal, 30-fourth opening, 4-cell, 5-first electric connector, 50-first insulating gummed paper, 51-first bending section, 52-second bending section, 53-third bending section, 6-first insulator, 60-third opening, 7-second insulator, 8-second electric connector, 80-second insulating gummed paper, 9-third insulator, 90-fifth opening.

### DETAILED DESCRIPTION

Various exemplary embodiments of the present disclosure will now be described in detail with reference to the accompanying drawings. It is to be noted that unless otherwise specified, the scope of present disclosure is not limited to relative arrangements, numerical expressions and values of components and steps as illustrated in the embodiments.

Description to at least one exemplary embodiment is for illustrative purpose only, and in no way implies any restriction on the present disclosure or application or use thereof.

Techniques, methods and devices known to those skilled in the prior art may not be discussed in detail; however, such techniques, methods and devices shall be regarded as part of the description where appropriate.

In all the examples illustrated and discussed herein, any specific value shall be interpreted as illustrative rather than restrictive. Different values may be available for alternative examples of the exemplary embodiments.

It is to be noted that similar reference numbers and alphabetical letters represent similar items in the accompanying drawings. In the case that a certain item is identified in a drawing, further reference thereof may be omitted in the subsequent drawings.

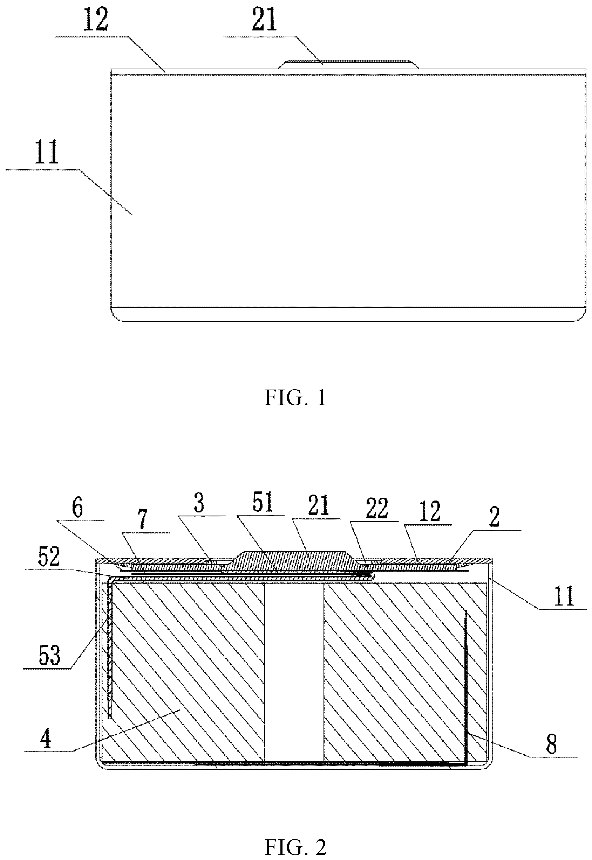

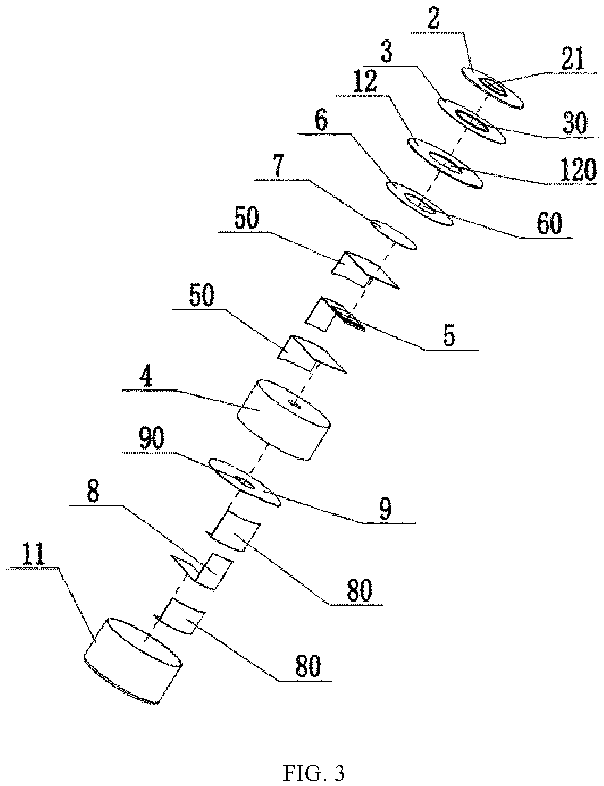

According to an embodiment of the present disclosure, an energy storing apparatus is provided. As shown in FIGS. 1-3, the energy storing apparatus comprises:
a housing 11 having a first opening through which a cavity of the housing 11 communicates with the outside. For example, the housing 11 is composed of a floor and a sidewall arranged surrounding the floor, the floor closes one end of the sidewall, and the other end of the sidewall forms the first opening. The space inside the floor and side wall is the cavity.

An end cover 12 is connected to the housing 11, covers the first opening, and is provided with a second opening 120. The connection between the end cover 12 and the housing 11 is a sealed connection.

A metal part 2 is provided on an inner side of the end cover 12 and has a first boss 21 which protrudes via the second opening 120 to an outer side of the end cover 12. The first boss 21 protrudes from a lateral surface of the end cover 12, and a portion protruding from the end cover 12 can form a structure for connection with an external circuit outside the energy storing apparatus, such that the electrode connected to the metal part 2 facilitates electrical connection to an external circuit.

An insulating seal 3 is provided between the metal part 2 and the end cover 12. The insulating seal 3 has a sealing and insulating effect between the metal part and the end cover 12, which guarantees the sealing performance in the energy storing apparatus and insulates the end cover from the metal part 2. This prevents a short circuit between the electrode on the metal part 2 and the electrode on the end cover 12.

For example, the insulating seal 3 is provided with a fourth opening 30. The first boss 21 protrudes to an outer side of the end cover 12 after passing through the fourth opening 30 and the second opening 120 in turn.

One technical effect of the present disclosure is that by providing the metal part 2 inside the end cover 12, the electrode of the energy storing apparatus can be electrically connected to the metal part 12, and by making that the first boss 21 on the metal part 2 protruding via the second opening 120 to an outer side of the end cover 12, the electrode of the energy storing apparatus can be led out to the outside of the energy storing apparatus, and thus facilitates electrical connection to an external circuit

In one embodiment, as shown in FIG. 2, the energy storing apparatus further comprises a cell 4 which is provided in the cavity, one electrode of the cell 4 is electrically connected to the metal part 2, and another electrode of the cell 4 is electrically connected to the end cover 12 or the housing 11.

In the present embodiment, the electrode of the cell 4 electrically connected to the metal part 2 serves as one of the positive electrode and the negative electrode of the energy storing apparatus. The other of the positive electrode and the negative electrode may be formed by electrically connecting the other electrode of the cell 4 to the housing 11, and may also be formed by electrically connecting the other electrode of the cell 4 to the end cover 12.

For example, the positive electrode of the cell 4 is electrically connected to the metal part 2, and the metal part 2 serves as the positive electrode of the energy storing apparatus. An external circuit to be electrically connected to the positive electrode of the energy storing apparatus is electrically connected to the first boss 21.

The negative electrode of the cell 3 is electrically connected to the housing 11, so that the housing 11 forms the negative electrode of the energy storing apparatus. The negative electrode of the cell 4 may also be electrically connected to the end cover 12, so that the end cover 12 forms the negative electrode of the energy storing apparatus.

For example, the connection structure of the end cover 12 and the housing 11 may be an electrical connection, for example, the end cover 12 and the housing 11 are welded. When the negative electrode of the cell 3 is electrically connected to the end cover 12 or the housing 11, both the end cover 12 and the housing 11 may serve as the negative electrode of the energy storing apparatus.

Optionally, the cell 4 is provided with a second electric connector 8, and is electrically connected to the end cover 12 or the housing 11 through the second electric connector 8. For example, the surface of the second electric connector 8 is provided with a second insulating gummed paper 80. The second insulating gummed paper 80 can prevent the second electric connector 8 from being short-circuited with the other electrode at the end of the cell 4.

For example, the second electric connector 8 is in a sheet-like structure, and two surfaces thereof are both provided with the second insulating gummed papers 80.

Optionally, a third insulator 9 is provided between the second electric connector 8 and the cell 4, and forms an insulating layer between the second electric connector 8 and the end face of the cell 4, so as to prevent the second electric connector 8 from being short-circuited on the end face of the cell 4.

For example, the cell 4 is in a winding structure which is hollowed in the middle. After the cell 4 is inserted into the housing 11, the second electric connector 8 is welded to the housing 11 through the position of the hollowed structure. For example, the third insulator 9 is provided with a fifth opening 90. The fifth opening 90 corresponds to the hollowed structure on the cell 4, and a part of the second electric connector 8 is exposed in the fifth opening 90 after the cell 4 is placed into the housing 11. This makes it easier to weld the second electric connector 8 to the housing 11.

Optionally, a part of the second electric connector 8 is located at a side position of the cell 4 and forms an electric connection, and the other part of the second electric connector 8 is bent toward the end face of the cell 4 near the bottom of the housing 11. The third insulator 9 is provided with a notch for avoiding the second electric connector 8. For example, the third insulator 9 is in a circular ring structure, a part of an outer side of which is cut off to form the notch, so as to prevent the third insulator 9 and the second electric connector 8 from squeezing and interfering with each other.

In one embodiment, as shown in FIGS. 2-3, the cell 4 is provided with a first electric connector 5.

The first electric connector 5 comprises a first bending section 51, a second bending section 52 and a third bending section 53, the second bending section 52 is connected to the first bending section 51 and the third bending section 53 respectively, the third bending section 53 is electrically connected to the cell 4, the second bending section 52 is bent to the end face of the cell 4 relative to the third bending section 53, the first bending section 51 is bent relative to the second bending section 52, the first bending section 51 is located between the second bending section 52 and the metal part 2, and the first bending section 51 is connected to the metal part 2.

In the present embodiment, the first electric connector 5 is electrically connected to the cell 4 through the third bending section 53. The second bending section 52 is bent relative to the third bending section 53 to the end face of the cell 4, so that the second bending section 52 is tiled on the end face of the cell 4. This can reduce the space occupied by the second bending section 52.

The first bending section 51 is bent relative to the second bending section 52, so that the first bending section 51 and the second bending section 52 are laminated together, so as to further reduce the space occupied by the first electric connector 5.

For example, when assembling the energy storing apparatus, the third bending section 53 may be electrically connected to the cell 4 first, and then the cell 4 is placed into the housing 11. After the cell 4 is placed, the first bending section 51 is electrically connected to the metal part 2. Finally, the first electric connector 5 is bent, so that the second bending section 52 is tiled on the end face of the cell 4, and the first bending section 51 and the second bending section 52 are laminated.

Alternatively, the first electric connector 5 may be electrically connected to the cell 4 and the metal part 2 first, and then the cell 4 is assembled into the housing 11 and the end cover 12 is covered on the first opening.

The first electric connector 5 comprises the first bending section 51, the second bending section 52 and the third bending section 53. The first bending section 51 and the second bending section 52 may provide a sufficient length so that the first bending section 51 and the metal part 2 can be welded together more easily. This reduces the difficulty of assembly.

Optionally, a first insulating gummed paper 50 is provided on the surface of the first electric connector 5, and may form insulation protection on the surface of the first electric connector 5.

For example, the first electric connector 5 is in a sheet-like structure, and two surfaces thereof are provided with the first insulating gummed papers 50.

In one embodiment, as shown in FIGS. 2-3, the metal part 2 is provided with a first insulator 6 which is provided with a third opening 60, and the first bending section 51 is exposed via the third opening 60 to connect with the metal part 2.

In the present embodiment, the first insulator 6 is located on the side of the metal part 2 facing the first electric connector 5. The first insulator 6 can prevent the metal part 2 from coming into contact with parts other than the first bending section 51, thereby avoiding the problem of the short circuit. For example, the contact between the metal part 2 and the cell 4 is avoided.

In one embodiment, the first bending section 51 has a second boss which is exposed via the third opening 60 to connect with the metal part 2.

In the present embodiment, the first bending section 51 is located on the side of the metal part 2 after being bent relative to the second bending section 52, the second boss enables the first bending section 51 to provide a sufficient thickness to be exposed from the third opening 60 so as to make contact with the metal part 2, thereby making it easier for the first bending section 51 to be electrically connected to the metal part 2.

For example, the first bending section 51 abuts against the surface of the first insulator 6, and the second boss is exposed from the third opening 60 to make contact with the surface of the metal part 2, thereby electrically connecting the second boss to the metal part 2.

Optionally, a second insulator 7 is provided between the first bending section 51 and the second bending section 52, and can prevent surfaces of the first bending section 51 and the second bending section 52 from coming into contact, thereby preventing the second bending section 52 from being punctured. For example, the first bending section 51 is welded to the metal part 2. The surface of the first bending section 51 is provided with a solder joint, and the second insulator 7 can prevent the solder joint from puncturing the second bending section 52. This can protect the first electric connector 5 from being damaged, and form an effective insulation between the first bending section 51 and the end face of the cell 4.

In one embodiment, the cell 4 comprises a positive electrode piece, a negative electrode piece, and a diaphragm located between the positive electrode piece and the negative electrode piece, and the positive electrode piece, the negative electrode piece and the diaphragm are laminated to form a winding structure.

One of the positive electrode piece and the negative electrode piece serves as one electrode of the cell 4 to electrically connect to the metal part 2, and the other serves as another electrode of the cell 4 to electrically connect to the end cover 12 or the housing 11.

A portion of the diaphragm protruding from an end of the winding structure is an edge-ironed structure.

In the present embodiment, the cell 4 is the winding structure, and the diaphragm protruding from the end of the cell 4 is contracted and pressed down by ironing the edge so as to reduce the space occupied by the diaphragm at the end, thereby reducing the occupied space of the cell 4 which increases due to the diaphragm.

In one embodiment, as shown in FIG. 2, the metal part 2 is provided with an explosion-proof marking 22.

The explosion-proof marking 22 is able to burst and relieve pressure when the air pressure inside the energy storing apparatus 2 is high, thus avoiding the explosion of the energy storing apparatus.

In one embodiment, the explosion-proof marking 22 is arranged surrounding the first boss 21.

On the metal part 2, the thickness at the position where the first boss 21 is located is great. By arranging the explosion-proof marking 22 surrounding the first boss 21, the explosion-proof marking 22 is in a position with low thickness and is therefore more likely to burst when the internal pressure is high, so as to complete the pressure relief function.

For example, the explosion-proof marking 22 is exposed in the second opening 120 to prevent the end cover 12 from affecting the pressure relief of the explosion-proof marking 22.

In one embodiment, the insulating seal 3 comprises an annular floor and an annular sidewall provided on the annular floor, the annular floor is located between the end cover 12 and the metal part 2, and the annular sidewall extends into the second opening 120 and is located between the inner wall of the second opening 120 and the first boss 21.

In the present embodiment, the annular floor forms a sealing and insulating effect between the inside of the end cover 12 and the metal part 2. The annular sidewall forms an insulating effect between the inner wall of the second opening 120 and the first boss 21 to prevent the first boss 21 from contacting the inner wall of the second opening 120.

For example, the explosion-proof marking 22 is exposed inside the annular sidewall. The inside of the annular sidewall forms a fourth opening 30.

In one embodiment of the present disclosure, an electronic device is provided, comprising the energy storing apparatus as described in any of the above embodiments. The energy storing apparatus of the electronic device has the technical effect brought by the above energy storing apparatus.

The above embodiments focus on the differences among the embodiments, and the different optimization features among the embodiments can be combined to form a better embodiment as long as they are not contradictory. Considering the brevity of the text, the description is not repeated here.

Although the present disclosure has been described in detail in connection with some specific embodiments by way of illustration, those skilled in the art should understand that the above examples are provided for illustration only and should not be taken as any limitation on the scope of the disclosure. Those skilled in the art will appreciate that modifications may be made to the above embodiments without departing from the scope and spirit of the present disclosure. We therefore claim as our disclosure all that comes within the scope of the appended claims.

## Claims

1. A energy storing apparatus, **characterized by** comprising:
a housing (11) having a first opening through which a cavity of the housing (11) communicates with the outside;
an end cover (12) connected to the housing (11), covering the first opening, and provided with a second opening (120);
a metal part (2) provided on an inner side of the end cover (12) and having a first boss (21) which protrudes via the second opening (120) to an outer side of the end cover (12); and an insulating seal (3) provided between the metal part (2) and the end cover (12).

2. The energy storing apparatus according to claim 1, wherein the energy storing apparatus further comprises a cell (4) which is provided in the cavity, one electrode of the cell (4) is electrically connected to the metal part (2), and another electrode of the cell (4) is electrically connected to the end cover (12) or the housing (11).

3. The energy storing apparatus according to claim 2, wherein the cell (4) is provided with a first electric connector (5);
the first electric connector (5) comprises a first bending section (51), a second bending section (52) and a third bending section (53),
the second bending section (52) is connected to the first bending section (51) and the third bending section (53) respectively,
the third bending section (53) is electrically connected to the cell (4),
the second bending section (52) is bent to an end face of the cell (4) relative to the third bending section (53),
the first bending section (51) is bent relative to the second bending section (52),
the first bending section (51) is located between the second bending section (52) and the metal part (2), and
the first bending section (51) is connected to the metal part (2).

4. The energy storing apparatus according to claim 3, wherein the metal part (2) is provided with a first insulator (6) which is provided with a third opening (60), and the first bending section (51) is exposed via the third opening (60) to connect with the metal part (2).

5. The energy storing apparatus according to claim 4, wherein the first bending section (51) has a second boss which is exposed via the third opening (60) to connect with the metal part (2).

6. The energy storing apparatus according to claim 2, wherein the cell (4) comprises a positive electrode piece, a negative electrode piece, and a diaphragm located between the positive electrode piece and the negative electrode piece, and the positive electrode piece, the negative electrode piece and the diaphragm are laminated to form a winding structure;
one of the positive electrode piece and the negative electrode piece serves as one electrode of the cell (4) to electrically connect to the metal part (2), and the other serves as another electrode of the cell (4) to electrically connect to the end cover (12) or the housing (11); and
a portion of the diaphragm protruding from an end of the winding structure is an edge-ironed structure.

7. The energy storing apparatus according to claim 1, wherein the metal part (2) is provided with an explosion-proof marking (22).

8. The energy storing apparatus according to claim 7, wherein the explosion-proof marking (22) is arranged surrounding the first boss (21).

9. The energy storing apparatus according to claim 1, wherein the insulating seal (3) comprises an annular floor and an annular sidewall provided on the annular floor, the annular floor is located between the end cover (12) and the metal part (2), and the annular sidewall extends into the second opening (120) and is located between the inner wall of the second opening (120) and the first boss (21).

10. An electronic device, **characterized by** comprising the energy storing apparatus according to any one of claims 1 to 9.
